# EUROPEAN PATENT APPLICATION

(11) **EP 1 317 118 A1**
(43) Date of publication of application: **04.06.2003**
(21) Application number: 01440407.3
(22) Date of filing: 03.12.2001
(51) Int. Cl.: H04M 1/253, H04L 29/06

(54) **A telephone installation designed to operate over a local area network**

(71) Applicant: ALCATEL, 75008 Paris (FR)
(72) Inventor: Douhet, Gérard, 67640 Fegersheim (FR); Gass, Raymond, 67150 Bolsenheim (FR); Le Creff, Michel, 95450 Vigny (FR)
(74) Representative: Menzietti, Domenico, Dipl.-Ing

(57) **Abstract**

The present invention relates to a telephone installation designed to operate over a local area network conveying speech, control, and signaling signals, the installation comprising at least a telephone appliance (2) and a personal computer (1) connected to said network, said computer (1) being equipped with a first interface (21) for communication with a terminal and with a second interface (20) for communication with the local area network. Said telephone appliance (2) is provided with a two-way interface (22) connected by a connection (13) conveying speech and signaling signals to the said first interface (21) of said computer (1) which is equipped with gateways between its two interfaces (20, 21) for controlling connection with the said telephone appliance.

## Description

The present invention relates to a telephone installation designed to operate over a local network.

More precisely, the invention relates to a telephone installation designed to operate over a local area network (LAN) conveying speech and signaling signals, the installation comprising at least a telephone appliance and a personal computer connected to said network, said computer being equipped with a first interface for communication with a terminal and with a second interface for communication with the local area network.

A known telephone appliance designed to operate over a local area network comprises physical components forming the user interface, such as sound transducers, audio amplifiers, a keypad, a screen and an interface for connection with the local network, and comprises functions for processing data and computer signals, said functions being connected to the physical components via interfaces.

In the case of a telephone connected to a local area network, e.g. connected to an Ethernet network, the telephone is connected to a network socket and it is very common for said telephone to be in the vicinity of a personal computer (PC). The PC is also connected to the network socket and is equipped in conventional manner with audio communications functions.

It therefore turns out that a large proportion of the physical functions and functions for processing data and computer signals included in the telephone appliance are identical to those included in the PC.

This leads to redundancy of costly computer and physical functions.

The invention solves that problem by eliminating said computer and physical functions from the telephone appliance, and by enabling the computer equipment of the PC to be used for operating the telephone appliance.

The invention therefore proposes that said telephone appliance is provided with a two-way interface connected by a connection conveying speech and signaling signals to the said first interface of said computer which is equipped with gateways between its two interfaces for controlling connection with the said telephone appliance.

A telephone appliance can thus be provided that is cut-down in content and therefore less costly, the appliance omitting at least the redundant computer functions.

An other advantage of the invention is that the telephone appliance is independent of any future changes of the network. For example, network characteristics or the network itself can change without consequence on the telephone appliance.

In the same way, complete freedom is given to the user over the computer functions in computer system. For example, any function such as conference mode can be implemented by a server or by the PC.

Compared to a PC-only solution, i.e. direct use of only the PC to make telephone calls, the solution of the invention enables a conventional telephone appliance to be retained and therefore used in conventional manner, without users having to learn new habits.

In addition, PCs are equipped with a universal serial bus (USB) interface having a connector that includes four wires, two wires for powering the "slave" equipment, and two data wires enabling two-way transmission with the equipment connected to the connector.

Preferably, said first interface is a USB interface.

Said local network is preferably an Ethernet network.

Advantageously, the only functions contained in the appliance are those contained in a dumb terminal, all other functions being contained in said computer.

The telephone appliance retains only those basic user interface functions that are needed by its user interface and it is totally dependent on the PC.

Preferably, said gateways comprise:
• a supervisor module connected to the operating system of the PC;
• a transcoding module controlled by the supervisor module and transcoding between the signaling protocols conveyed by the local area network and the control and signaling signals conveyed by the connection;
• a transformation module controlled by the module and performing functions of transforming the speech signals conveyed over said connection and over the local area network;
• a module connected firstly to said second interface of the PC and secondly to the transcoding and transformation modules and performing the function of multiplexing and demultiplexing speech packets and signaling packets present on the local area network; and
• a module connected firstly to said first interface of the PC and secondly to the modules and performing the function of multiplexing and demultiplexing speech channels and control and signaling signals present on said connection.

Advantageously, said transformation module performs at least one function from the following functions: compression and decompression; assembling and disassembling packets; removing jitter; encrypting and decrypting; and a conference function.

Preferably, said interface of the telephone appliance performs multiplexing and demultiplexing of the speech channels and of the control and signaling signals present on said connection.

Advantageously, the telephone appliance further comprises:
- a module receiving the speech signals from said interface of the telephone appliance and performing the necessary analog-to-digital and digital-to-analog transformations; and
- a module, receiving the control and signaling signals from said interface of the telephone appliance and transforming signals between the interface and the various elements of the appliance and managing the keypad, the function keys, and the display, and controlling an amplifying electronic module.

Preferably, said modules are software modules.

The invention also provides a telephone appliance and a personal computer for making up an installation as mentioned-above.

The invention is described in more detail below, with reference to the figures which show a preferred embodiment of the invention.

Figure 1 is a diagram showing a telephone installation of the invention.

Figure 2 is a diagram showing the electronic devices of the installation of the invention.

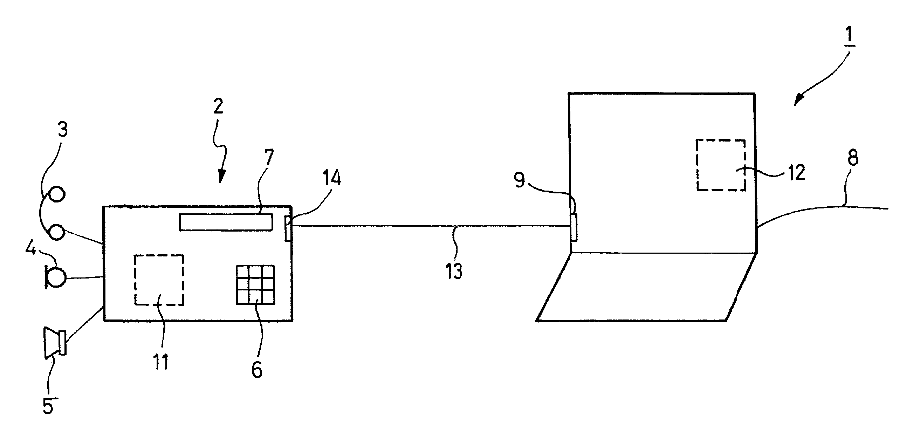

In Figure 1, a PC 1 and a telephone appliance 2 are shown diagrammatically.

The personal computer or PC 1, which is a fixed or portable unit, is connected via a connection 8 to a local network, e.g. an Ethernet network. As "master" equipment, it is equipped with a USB connection 9. The connection is designed to connect peripherals or "slave" equipment, e.g. a printer or the like. Such a standardized connection comprises four wires, two of which, +V and 0V, are intended to power the slave equipment, and two of which, D+ and D-, enable two-way transmission of data between the master and slave equipment.

In conventional manner, the telephone appliance 2 is provided, in a housing, with:
sound interfaces: an earpiece 3, a mouthpiece 4, an audio amplifier 5, a buzzer ...;
input interfaces: keypad 6, function keys ...;
video input/reproduction interfaces;
visual display interfaces: display 7 ...;
optional interfaces for connection with other equipment; and
a microprocessor 11 for processing data associated with telephone appliance functions.

In known appliances, the microprocessor 11 is used to process all of the data that is necessary to enable the appliance to be used on its own.

Conventionally, the PC 1 itself is also equipped with applications for communicating via the network.

In the invention, at least that part of data processing which is common to the appliance 2 and to the PC 1 is eliminated from the telephone appliance 2.

This processing is thus performed only by the microprocessor 12 of the PC 1. To enable the PC to control the telephone appliance 2, the two pieces of equipment are interconnected via a connection 13.

To do this, the telephone appliance 2 is provided with a two-way USB connector 14 connected to the USB interface 9 of the computer 1 which is equipped with functions for controlling a USB connection with a telephone terminal, i.e. in particular, for controlling the appliance 2 and for interchanging data.

This type of connection is known from patent documents DE-U-299 01 160 or JP-A-2000284874, for example.

Other data processing functions can be processed by the microprocessor 12 of the PC 1 in order to cut down the data processing functions of the telephone appliance 2 even further.

The PC 1 can therefore include other gateways:
control of audio functions for voice by using IP communication, in particular amplitude, hands-free mode, compression/decompression, conference mode,...;
control of signaling by using appropriate protocols (MEGACO, SIP, H323);
storage of any information relating to the telephone appliance 2, in particular dialing list, voice announcements,...; and
control of local or remote call handling.

The invention thus enables any updates found necessary to be made in evolutionary and open manner.

In case of maximal transfer of functions towards the PC, the telephone appliance becomes a "dumb" terminal, i.e. a terminal that is passive or not smart.

The above description relates to a fixed telephone appliance 2.

The invention can also apply to a mobile telephone, said mobile telephone being provided with a two-way USB connector connected to the USB interface of the computer. The mobile telephone can keep all of its functions necessary to use over a telecommunications network and also comprises the USB interface and the computer and physical functions for connection to the PC.

In this case, the invention presents the advantage of enabling a mobile telephone appliance to be used as a fixed telephone on a local network while it is connected to a PC, i.e. of transforming it into a local network telephone, e.g. into an IP telephone.

The specification above describes interconnection of a telephone appliance and a PC by means of a USB interface. This connection can be made by other means, for example by wired, radio, or optical connections. Only the physical interfaces differ from those of the above-described embodiment.

It is also possible to manage a plurality of telephone appliances with only one PC and the telephone installation of the invention can comprise a plurality of telephone appliances.

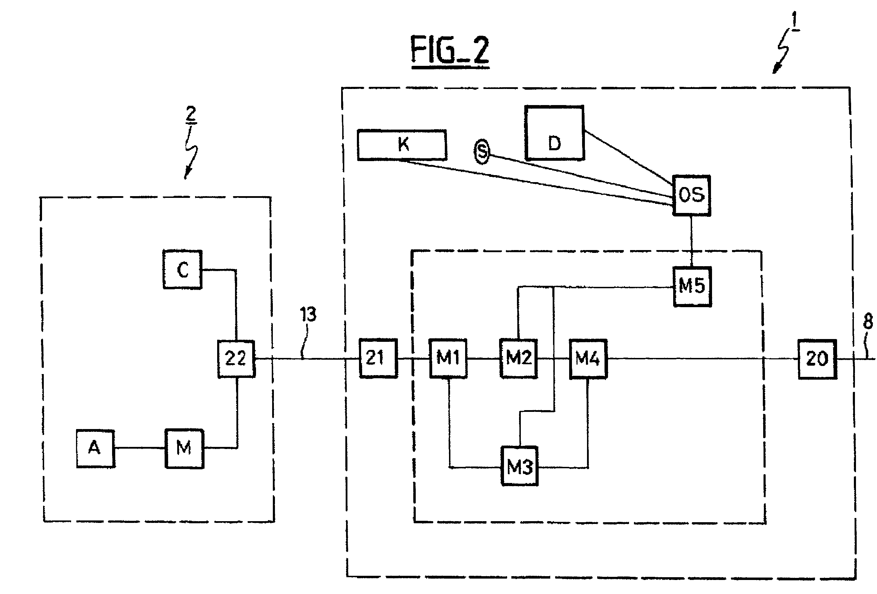

Figure 2 is a diagram of the gateways of the installation physically described with reference to Figure 1.

The USB connection 13 which connects together the telephone appliance 2 and the PC 1 enables signals to be interchanged in both directions in stimuli mode for commands and signaling, and in PCM format for speech signals. The Internet connection 8 connecting the PC 1 to the local area network enables signals to be interchanged in both directions in compliance with the Ethernet standard.

Consequently, the telephone appliance 2 and the PC 1 comprise elements required for transforming signals to enable the user to communicate over the local area network.

The USB connection 13 thus supports two types of signal and signaling type signals in stimuli mode, and speech type signals in PCM mode.

Stimuli mode enables a signal corresponding to a user action to be transmitted from the telephone appliance 2 to the PC 1, e.g. a key press, and it enables commands or signaling coming from the network or generated by the PC to be transmitted from the PC 1 to the telephone appliance 2 (e.g. starting amplified reception,...).

The PC 1 thus has an Ethernet interface 20 connected to the connection 8, and a USB interface 21 connected to the link 13, and the telephone appliance 2 has a USB interface 22.

The telephone appliance 2 comprises the following, preferably electronic, modules connected to the USB interface 22:
- an electronic amplifier module A made up of the amplifiers required by the sound transducers (microphone, earpiece, loudspeaker) and also the hands-free function when it exists;
- an electronic module C which performs the necessary transformations: analog-to-digital and digital-to-analog; and
- an electronic module M, which is a microcontroller performing the following tasks: managing the keypad, the function keys, and the display, and controlling the electronic module A; it also transforms signals between the USB interface 22 and the various elements such as the keypad, the function keys, and the display.

The USB interface module 22 performs multiplexing and demultiplexing of the speech channels and of the control and signaling signals present on the USB connection 13. The speech signals are processed by the electronic module C while the other signals are processed by the microcontroller M.

If the hands-free function is implemented, this function can be included in the controlling electronic module M.

In the PC, the gateways are in the form of five functional modules, which, preferably, are software modules.
- a module M1 connected firstly to the USB interface 21 of the PC 1 and secondly to the modules M2 and M3; it performs the function of multiplexing and demultiplexing the speech channels and the control and signaling signals present on the USB connection 13;
- a transcoding module M2 transcoding between signaling protocols such as H248, SIP, etc., conveyed by the Ethernet connection, and the control and signaling signals in stimuli mode as present on the USB connection 13; the module M2 is also controlled by a module M5;
- a transformation module M3 performing all of the transformation functions on the speech signals conveyed in PCM mode over the USB connection 13 and in packet mode over the Ethernet connection 8; amongst other things, this module M3 performs certain functions such as: compression and decompression; assembling and disassembling packets; removing jitter; encryption and decryption; and where necessary, this module M3 performs the conference function when communication is taking place between multiple parties;
- a module M4 connected firstly to the Ethernet interface 20 of the PC 1 and secondly to the modules M2 and M3; this module performs the multiplexing and demultiplexing function on speech packets, signaling packets and data packets (for use of the PC only) present on the Ethernet connection 8 (e.g. SIP or H.248 messages); and
- a supervisor module M5, serving firstly to supervise and control the modules M2 and M3, and secondly communicating with the functions of the PC 1 via the operating system OS thereof; its main function is to process telephone applications (processing incoming and outgoing calls, telephone repertory dialer, generating ringing melodies, etc. ...); the telephone applications are initialized from commands coming from the appliance via the USB connection 13, from commands coming from the Ethernet network, or from local commands issued by the PC 1, e.g. actions that can be launched from the keyboard K of the PC or from its mouse M; this module M5 also enables the telephone appliance 2 to be configured: either by using the keys of the appliance itself, or by using commands coming from the PC, or by downloading over the Ethernet connection.

## Claims

1. A telephone installation designed to operate over a local area network conveying speech and signaling signals, the installation comprising at least a telephone appliance (2) and a personal computer (1) connected to said network, said computer (1) being equipped with a first interface (21) for communication with a terminal and with a second interface (20) for communication with the local area network, the installation being **characterized in that** said telephone appliance (2) is provided with a two-way interface (22) connected by a connection (13) conveying speech and signaling signals to the said first interface (21) of said computer (1) which is equipped with gateways between its two interfaces (20, 21) for controlling connection with the said telephone appliance.

2. A telephone installation according to claim 1, **characterized in that** said first interface (21) is an USB interface.

3. An installation according to either preceding claim, **characterized in that** the only functions contained in the telephone appliance (2) are those contained in a dumb terminal, all other functions being contained in said computer (1).

4. An installation according to either preceding claim, **characterized in that** said gateways comprise:
• a supervisor module (M5) connected to the operating system (OS) of the PC (1);
• a transcoding module (M2) controlled by the supervisor module (M5) and transcoding between the signaling protocols conveyed by the local area network and the control and signaling signals conveyed by the connection (13);
• a transformation module (M3) controlled by the module (M5) and performing functions of transforming the speech signals conveyed over said connection (13) and over the local area network;
• a module (M4) connected firstly to said second interface (20) of the PC (1) and secondly to the modules (M2, M3) and performing the function of multiplexing and demultiplexing speech packets and signaling packets present on the local area network; and
• a module (M1) connected firstly to said first interface (21) of the PC (1) and secondly to the transcoding and transformation modules (M2, M3) and performing the function of multiplexing and demultiplexing speech channels and control and signaling signals present on said connection (13).

5. An installation according to claim 4, **characterized in that** said transformation module (M3) performs at least one function from the following functions: compression and decompression; assembling and disassembling packets; removing jitter; encrypting and decrypting; and a conference function.

6. An installation according to either preceding claim, **characterized in that** said interface (22) of the telephone appliance (2) performs multiplexing and demultiplexing of the speech channels and of the control and signaling signals present on said connection (13).

7. An installation according to claim 6, **characterized in that** the telephone appliance (2) further comprises:
• a module (C) receiving the speech signals from said interface (22) of the telephone appliance (2) and performing the necessary analog-to-digital and digital-to-analog transformations; and
• a module (M), receiving the control and signaling signals from said interface (22) of the telephone appliance (2) and transforming signals between the interface and the various elements of the appliance (2) and managing the keypad, and the display, and controlling an amplifying module (8).

8. An installation according to any one of claims 4 to 7, **characterized in that** said modules are software modules.

9. A telephone appliance for making up an installation in accordance with any preceding claim.

10. A personal computer for making up an installation in accordance with any one of claims 1 to 8.
